# EUROPEAN PATENT APPLICATION

(11) **EP 4 166 882 A1**
(43) Date of publication of application: **19.04.2023**
(21) Application number: 22200448.3
(22) Date of filing: 09.10.2022
(51) Int. Cl.: F28D 20/00, F24H 1/00, F24D 1/00

(54) **ENERGY RECOVERY SYSTEM OR PLANT**

(30) Priority: 13.10.2021 IT 202100026192
(71) Applicant: I&M Technology Ltd., London Greater London SW6 3JJ (GB)
(72) Inventor: DARIO, ROBERTO, LONDON, SW6 3JJ (GB)
(74) Representative: Citron, Massimiliano

(57) **Abstract**

A method is described of recovering heat from waste water of a building, the water leaving a room through a drain to be disposed of.

The method envisages that the path of the water leaving the room is diverted to send it into a water accumulation, or to a drain, as a function of the order relationship between the temperature of the water leaving the room and the temperature of the water inside the accumulation.

## Description

The invention relates to an energy recovery system or plant for recovering thermal energy from the waste water of a building.

Energy saving, renewable sources and nuclear energy are increasingly at the center of attention. It is to be noted that e.g. about 23% of fuel consumption is used for room heating, while the remainder is used for other purposes, such as heating sanitary water, thermoelectric power plants, industrial complexes, etc.

Depending on the model, domestic furnaces emit fumes at 100/120 C° or between 130 and 220 C°; and the fumes coming out of industrial plants even have temperatures reaching 1200 C°. Much of this heat can be advantageously recovered with known systems.

However, there is no system for recovering the residual heat in the hot waste water sent to the sewer from an inhabited building.

The main object of the invention is therefore to propose a system and method for recovering residual heat from the hot waste water of a building, water which flows towards a sewer or drain. The system and method is defined in the attached claims, wherein the dependent ones define advantageous variants of the invention.

One aspect of the invention relates to a method of recovering heat from building wastewater leaving a room through a drain for disposal, wherein the path of the water leaving the room is diverted to send it into a water accumulation, or towards a drain (e.g. directly into a disposal drain), as a function of the order relationship (higher or lower) between the temperature of the water leaving the room and the temperature of the water inside the accumulation.

E.g. the order relationship can be calculated by the difference, and/or the sign of the difference, between the temperature of the water leaving the room and the temperature of the water inside the accumulation.

Only if the temperature of the water leaving the room is higher than the temperature of the water inside the accumulation, is the water diverted into the accumulation; otherwise the water is diverted to send it directly to a disposal drain.

To obtain said difference, in a preferred variant the temperature of the water leaving the room is measured, the temperature of the water in a (tank of) accumulation of said waste water located outside the room is measured, and the path of the water leaving the room is diverted to send it into the accumulation if the temperature of the water leaving the room is higher than the temperature of the water inside the accumulation, otherwise the path of the water leaving the room is diverted to send it directly in a disposal drain.

To obtain said difference or order relationship, it is possible to avoid directly detecting the two temperatures, e.g. by using a thermocouple, or by measuring a heat flow between the water leaving the room and the water inside the accumulation. Via the flow direction, the sign of the difference can be determined, or one can determine which temperature is higher.

With the proposed method, the hot waste water continues to heat the water of the accumulation or at least contributes to maintaining its temperature, and the thermal energy stored in the accumulation can be exploited for energy recovery, with its reuse.

Preferably the aforementioned decision to switch the diverter to divert the path of the water takes place automatically by means of an electronic circuit.

A preferred way of energy recovery involves subtracting heat from the water of the accumulation to transfer it to the water in a circuit (for its reuse). Currently, each drawing of hot water necessarily imposes replenishment with cold water coming from the aqueduct, therefore the water to be dispensed hot always cools down with each dispensing. The water heated in the aforementioned circuit can then be exploited in various ways, e.g. to replenish the water in a furnace or boiler, or to wash or cook, etc.

Preferably, the water circuit originates from a public aqueduct and ends in a furnace or boiler which supplies hot water to the building. Thus the boiler or boiler receives preheated water from the aqueduct, and consumption to heat the water is reduced.

Preferably, the water circuit by heat exchange draws heat also from a second water accumulation, which receives water heated by fumes emitted by the furnace. The combined use of the two accumulations can advantageously recover heat from the waste water and also from the furnace fumes, thereby increasing the efficiency of energy recovery.

Preferably an or each accumulation is made with a tank.

Another aspect of the invention relates to a system or plant for recovering heat from the waste water of a building having a room equipped with a drain for disposing of water after use. The system or plant comprises:
a water tank,

a sensing device for determining an order relationship (higher or lower) between the temperature of the water leaving the room and the temperature of the water inside the tank,
a diverter device configured to divert the path of water leaving the room in order to send it into the tank or towards a drain line (e.g. directly towards a disposal drain),
an electronic circuit configured to control the diverter device as a function of said order relationship so as to send water to the tank only if the temperature of the water leaving the room is higher than the temperature of the water inside the tank.

In particular, the sensing device is adapted to detect the difference, and/or the sign of the difference, between the temperature of the water leaving the room and the temperature of the water inside the tank, and the electronic circuit is configured to control the diverter device as a function of said difference and/or sign.

To obtain the difference, in a preferred variant the sensing device comprises
a sensor for measuring the temperature of the water leaving the room,
a sensor for measuring the water temperature in the tank of said waste water located outside the room, and

the electronic circuit is configured to read the signals emitted by two said sensors.

In a different preferred variant, the system or plant, for obtaining said difference, comprises a thermocouple, or a meter for the heat flow between the water leaving the room and the water inside the tank.

In a preferred variant, the system or plant comprises a water circuit, and a heat exchanger between the water circuit and the water of the accumulation in order to remove heat from the water of the accumulation via the water circuit.

Preferably, the system or plant comprises a furnace which supplies hot water to the building, and the water circuit is connected
to a public aqueduct to receive water and
to the furnace to supply it with hot water.

Preferably, the system or plant comprises
a gas heat exchanger for extracting heat from gases emitted by the furnace,
a second water tank, installed for receiving heated water coming from the gas heat exchanger,
wherein said water circuit is configured to withdraw heat by heat exchange from the second tank.

It should be noted that the overall system with the two tanks allows the recovery of the residual heat of the fumes and the heat of the hot waste waters before they are introduced into the sewer. So e.g. it is possible to recover about 90-95% of the heat that would otherwise be lost.

In the method and in the plant, said discharge path may comprise e.g. the direct delivery to a disposal drain or to a settling tank.

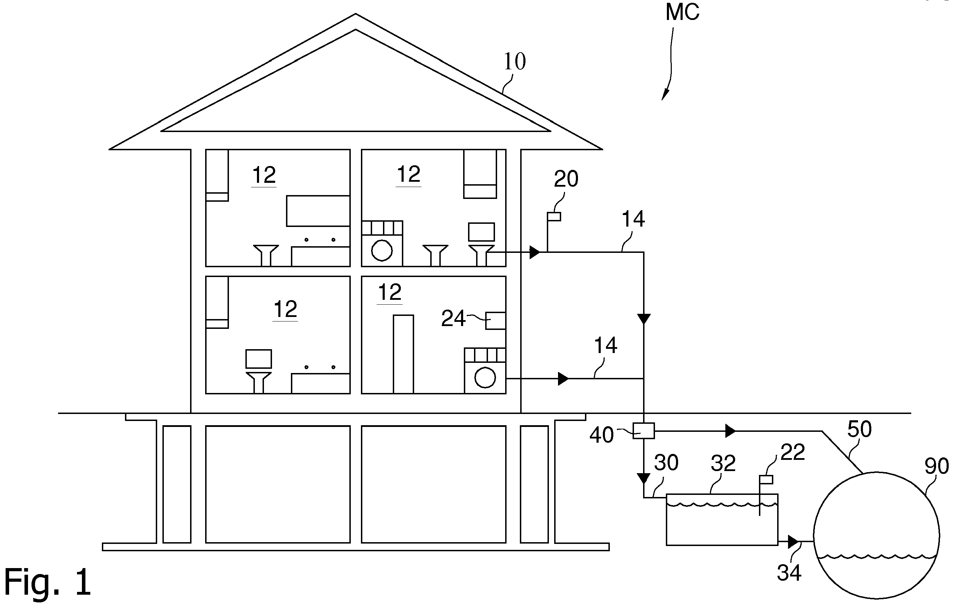

The advantages of the method and of the system will however be clearer from the following description of a preferred embodiment thereof, with reference to the attached drawing in which
- Fig. 1 shows a diagram of an energy recovery plant,
- Fig. 2 shows a diagram of an energy recovery plant,
- Fig. 3 shows a variant diagram for an energy recovery plant.

In the drawings, the arrows indicate the direction of water flow.

In the drawings, equal numbers indicate equal elements.

A system MC is applied to a building 10 comprising various rooms 12 having known drains 14 for the used water. For the sake of simplicity, we will refer only to a drain 14, but it is understood that the system described is preferably applied to the drains 14 of all the rooms 12.

From the drain 14 the water arrives at a flow diverter 40 through which it can be sent into a conduit 30 or into a conduit 50. The conduit 30 leads the water to a tank 32 having a drain 34 towards a sewer 90, the conduit 50 leads the water directly to the sewer 90.

In proximity of the flow diverter 40 or the drain 14 there is a first temperature sensor 20 for measuring the temperature of the water leaving the room 12 (or entering the diverter 40). A second temperature sensor 22 measures the temperature of the water contained in the tank 32. The sensor 20 and the sensor 22 are connected to an electronic control unit 24, programmed and/or configured to detect the temperatures from the two sensors 20, 22 and accordingly control the diverter 40.

The operating logic of the control unit 24 is as follows:
If the temperature of the water detected by the sensor 20 is higher than the temperature detected by the sensor 22, the control unit 24 drives the diverter 40 to divert the water into the conduit 30 so that it arrives inside the tank 32, otherwise the control unit 24 drives the diverter 22 to divert the water into the conduit 32 so that it reaches the sewer 90 and is dispersed.

This method allows the water inside the tank 32 to maintain a sufficiently high temperature over time to constitute a source of thermal energy from which to recover and withdraw heat. To do this e.g. a heat exchanger mounted inside the tank 32 can be used, e.g. a coil 70.

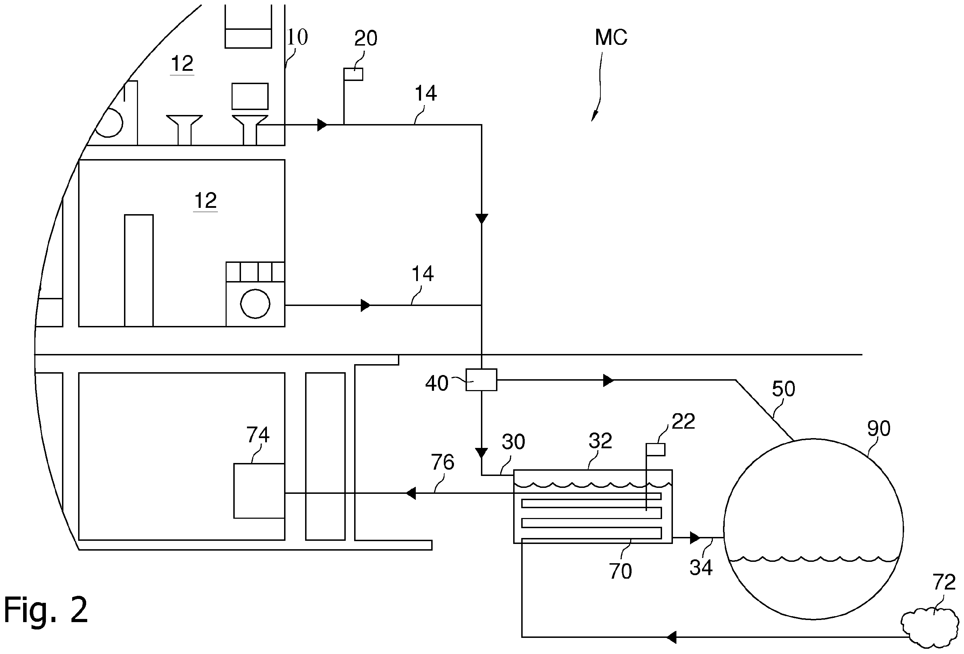

A preferred way of exploiting the heat stored in the tank 32 is shown in FIG. 2.

Preferably, the heat exchanger or coil 70 is fed upstream by the public aqueduct 72 and downstream supplies devices of the building 10 which deliver or use hot or lukewarm water (in any case hotter than the water of the aqueduct 72). In the example, the coil 70 via a duct 76 supplies downstream a furnace or a boiler 74 of the building 10, where the boiler or furnace 74 burns fuel to heat the water to be sent to the utilities of the building 10. In this way the energy consumption of the boiler or furnace 74 is reduced because the water at its inlet is on average hotter than the water of the aqueduct 72, therefore it no longer has to raise the water temperature starting from a lower temperature and consumes less fuel.

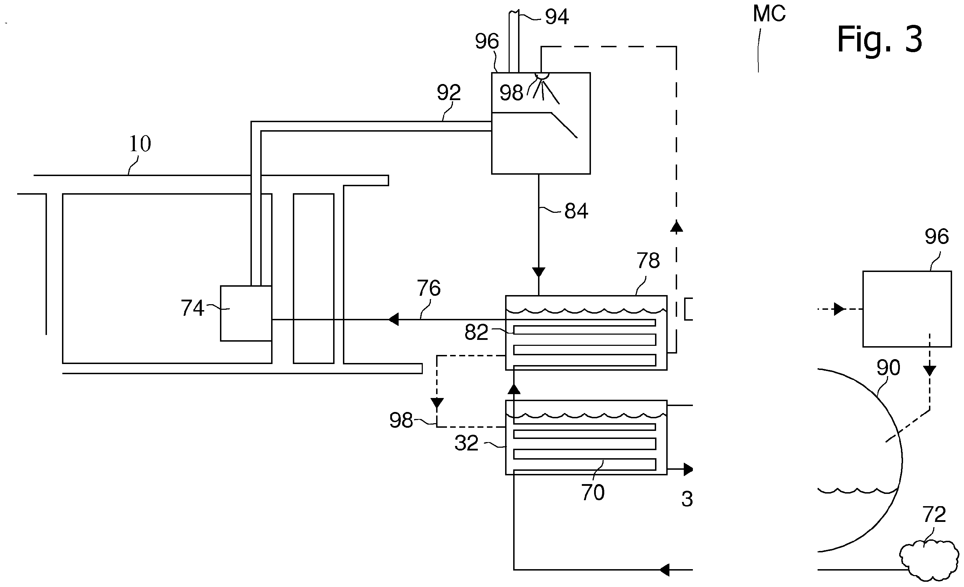

Fig. 3 illustrates a further preferred improvement of the system.

This time the coil 70 feeds downstream a second coil 82 located inside a second tank 78. The outlet of the second coil 82 is connected to the conduit 76 to supply the furnace or boiler 74 with water. A conduit 84 brings water into the second tank 78 heated by the hot fumes emitted into the atmosphere by the furnace 74. In particular, the furnace 74 emits combustion fumes into a duct 92, which conveys the fumes into a heat exchanger 96. The fumes leave the exchanger 96 towards the atmosphere from a pipe 94 after they have passed through curtains of water sprayed by sprayers 98. The water sprayed inside the exchanger 96 hits the fumes and removes heat from them thereby heating up. It is then collected in a duct 84 to end up inside the tank 82, where it heats the water contained therein. For the exchanger 96 any known construction can be used.

Thus the water brought to the furnace 74 through the duct 76 is further heated thanks to the drawing of heat through the coil 82 and the energy recovery from the fumes which takes place in the exchanger 96.

The tank 82 can have a drain towards the sewer 90 or, to save water, the water in the tank 82 is pumped to the sprinklers 98 creating a closed water loop (see broken lines in Fig. 3) which comprises the sprinklers 98, the conduit 84 and tank 82.

In all embodiments of the invention, in particular those described above, further variants, listed below, are possible, to be implemented alone or in combination.

The diverter 40 can be mounted on the discharge duct of each room or water utility of the building 10, or, to limit the number of diverters, on a common vertical drain column to which the drains of the water utilities on each floor of the building 10 are connected.

For the placement of the tanks 32, 78, they can be e.g. buried or located in the basement of the building 10.

The heat exchangers which draw heat from the water inside the tanks 32, 78 can be of various types, e.g. a coil as illustrated, some tube bundles, or other. The type of exchanger is not essential.

The type of exchanger which draws heat from the fumes of the boiler 74 to heat the water in the duct 84 is not essential too.

The use of the control unit 24 makes the system automatic, but it is not necessary. It is possible e.g. to envisage a display which indicates the temperatures detected by the sensors 20, 22 and the switch 40 can be activated manually by a user person.

In general, to control the diverter 40 it is sufficient to obtain a signal which expresses the temperature difference between the water in the tank 32 and in the drains of the water utilities of the building 10. Therefore, if the sensors 20, 22 are used, their type and/or position is not essential, it is enough only to be able to detect the temperature of the water in the tank 32 and in the drains of the water utilities of the building 10.

The water leaving the tank 32, which is hot for some application, can be re-used without being dispersed. The same for the 78 tank.

It is also possible that the tank 32 and the tank 78 coincide.

It is also possible that the drain 50 leads to a settling tank 96, from which the water then e.g. will reach the sewer 90.

The water contained in the tank 78 can also - or only - be introduced into the tank 32, e.g. with the aim of degreasing the latter, see dotted duct 98.

The concept of the invention is also applicable to industrial buildings.

## Claims

1. Method of recovering heat from waste water of a building, the water leaving a room through a drain to be disposed of,
wherein the path of the water leaving the room is diverted to send it into a water accumulation, or to a drain, as a function of the order relationship between the temperature of the water leaving the room and the temperature of the water inside the accumulation.

2. Method according to claim 1, wherein the order relationship is calculated by the difference, and/or the sign of the difference, between the temperature of the water leaving the room and the temperature of the water inside the accumulation.

3. Method according to claim 1 or 2, wherein
- the temperature of the water leaving the room is measured,
- the temperature of the water in an accumulation of said wastewater placed outside the room, is measured, and
- the path of the water leaving the room is diverted to send it into the accumulation if the temperature of the water leaving the room is higher than the temperature of the water inside the accumulation, otherwise the path of the water leaving the room is diverted to send it directly into a disposal drain.

4. Method according to claim 1 or 2 or 3, with the step of taking heat from the water in the accumulation to transfer it to water of a water circuit originating from a public aqueduct and terminating in a boiler or furnace supplying hot water to the building.

5. Method according to claim 4, wherein the water circuit by heat exchange draws heat also from a second water accumulation, which receives water heated by gas emitted from the furnace.

6. System for recovering heat from wastewater of a building having a room provided with a drain to dispose of water after use, comprising:
- a water tank,
- a sensing device for determining an order relationship between the temperature of the water leaving the room and the temperature of the water inside the tank,
- a diverter device configured to divert the path of the water leaving the room into the tank or into a drain line,
- an electronic circuit configured to control the diverter device as a function of said order relationship so as to send water to the tank only if the temperature of the water leaving the room is higher than the temperature of the water inside the tank.

7. System according to claim 6, wherein the sensing device is adapted to detect the difference, and/or the sign of the difference, between the temperature of the water leaving the room and the temperature of the water inside the tank, and the electronic circuit is configured to control the diverter device as a function of said difference and/or sign.

8. System according to claim 6 or 7, wherein the sensing device comprises
a sensor for measuring the temperature of the water leaving the room,
a sensor for measuring the temperature of the water in the tank of said waste water located outside the room, and
the electronic circuit is configured to read the signals emitted by two said sensors.

9. System according to claim 6 or 7 or 8, comprising:
a water circuit, and
a heat exchanger between the water circuit and the water of the tank in order to remove heat from the tank via the water circuit.

10. System according to claim 6 or 7 or 8 or 9, comprising a furnace for supplying hot water to the building, and
the water circuit is connected to a public aqueduct to receive water and to the boiler to supply it with hot water.
